# EUROPÄISCHE PATENTSCHRIFT

(11) **EP 3 337 855 B1**
(45) Veröffentlichungstag und Bekanntmachung des Hinweises auf die Patenterteilung: **24.07.2019**
(21) Anmeldenummer: 16754268.7
(22) Anmeldetag: 17.08.2016
(51) Int. Cl.: C08L 75/04, C08K 5/3492, C08K 5/5313, C08K 5/5317, C08K 5/521, C08G 18/76, C08G 18/75, C08G 18/44, C08G 18/32, H01B 3/30, C08G 18/73, C08G 18/38, C08G 18/48

(54) **FLAMMGESCHÜTZTES THERMOPLASTISCHES POLYURETHAN**
FLAME RETARDANT THERMOPLASTIC POLYURETHANE
POLYURETHANE THERMOPLASTIQUE IGNIFUGE

(30) Priorität: 21.08.2015 EP 15181934
(43) Veröffentlichungstag der Anmeldung: 27.06.2018
(73) Patentinhaber: BASF SE, 67056 Ludwigshafen am Rhein (DE)
(72) Erfinder: HENZE, Oliver Steffen, 49448 Lemförde (DE); MÜHREN, Oliver, 49565 Bramsche (DE)
(86) Internationale Anmeldenummer: PCT/EP2016/069491
(87) Internationale Veröffentlichungsnummer: WO 2017/032659

(56) Entgegenhaltungen:
- WO-A1-2014/179092
- WO-A1-2015/090953
- DE-A1- 10 317 487

## Beschreibung

Die vorliegende Erfindung betrifft eine Zusammensetzung enthaltend mindestens ein thermoplastisches Polyurethan TPU-1, das auf einem aliphatischen Diisocyanat basiert, ein thermoplastisches Polyurethan TPU-2, das auf einem aromatischen Diisocyanat basiert, ein Melamincyanurat, ein erstes phosphorhaltiges Flammschutzmittel (F1) ausgewählt aus der Gruppe bestehend aus Derivaten der Phosphorsäure und Derivaten der Phosphonsäure und ein weiteres phosphorhaltiges Flammschutzmittel (F2) ausgewählt aus der Gruppe bestehend aus Derivaten der Phosphinsäure. Weiter betrifft die vorliegende Erfindung die Verwendung derartiger Zusammensetzungen zur Herstellung von Kabelummantelungen.

Aus PVC hergestellte Kabel haben den Nachteil, dass sie beim Verbrennen toxische Gase entwickeln. Daher werden Produkte auf Basis von thermoplastischen Polyurethanen entwickelt, die geringere Rauchgastoxizitäten aufweisen und gute mechanische Eigenschaften, Abriebfestigkeit sowie Flexibilität aufweisen. Wegen des nicht ausreichenden Flammverhaltens werden Zusammensetzungen auf Basis von thermoplastischen Polyurethanen entwickelt, die verschiedene Flammschutzmittel enthalten.

Flammgeschützte thermoplastische Polyurethane finden vor allem Einsatz bei der Kabelherstellung als Kabelmantel. Dabei werden häufig auch dünne Kabel mit dünnen Kabelmänteln benötigt, die sowohl die einschlägigen Flammtests bestehen (z.B. VW1) als auch ausreichende mechanische Eigenschaften aufweisen.

Dabei können den thermoplastischen Polyurethanen (TPU) sowohl halogenhaltige als auch halogenfreie Flammschutzmittel beigemischt werden. Die halogenfrei flammgeschützten thermoplastischen Polyurethane haben dabei in der Regel den Vorteil, dass sie beim Abbrennen weniger toxische und weniger korrosive Rauchgase entwickeln. Halogenfreie flammgeschützte TPU sind beispielsweise beschrieben in EP 0 617 079 A2, WO 2006/121549 A1 oder WO 03/066723 A2. Auch US 2013/0059955 A1 offenbart halogenfreie TPU-Zusammensetzungen mit Flammschutzmitteln auf Phosphatbasis.

US 2013/0081853 A1 betrifft Zusammensetzungen, vorzugsweise halogenfreie flammhemmende Zusammensetzungen, umfassend ein TPU-Polymer und ein Polyolefin sowie Flammschutzmittel auf Phosphor-Basis und weitere Zusatzstoffe. Die Zusammensetzungen weisen ausweislich der US 2013/0081853 A1 gute mechanische Eigenschaften auf.

Auch Melamincyanurat ist als Flammschutzmittel für technische Kunststoffe seit längerer Zeit bekannt. Insbesondere in Polyamiden, aber auch in Polyestern und anderen Kunststoffen, wie Styrol-basierten Polymeren, findet es breite Anwendung. So beschreibt die WO 97/00916 A Melamincyanurat in Kombination mit Wolframsäure/Wolframsäuresalzen als Flammschutzmittel für aliphatische Polyamide. EP 0 019 768 A1 offenbart die Flammfestausrüstung von Polyamiden mit einer Mischung von Melamincyanurat und rotem Phosphor.

Dabei haben ausweislich der WO 03/066723 Materialien, die nur Melamincyanurat als Flammschutzmittel enthalten, bei dünnen Wanddicken weder einen guten Sauerstoffindex (Limiting Oxygen Index, LOI) noch eine gute Flammwidrigkeit, beispielsweise bestimmt durch die Performance bei einem UL 94 Test. Auch in WO 2006/121549 A1 werden Materialien beschrieben, die als Flammschutzmittel eine Kombination aus Melaminpolyphosphat, Phosphinat und Borat enthalten. Diese Materialien erreichen zwar bei dünnen Wanddicken hohe LOI Werte, aber keine guten Ergebnisse im UL 94 Test.

Auch verschiedene thermoplastische Polyurethane sind bekannt, die als Flammschutzmittel Kombinationen aus Melamincyanurat in Verbindung mit Phosphorverbindungen enthalten. EP 0 617 079 A2 und DE 102 24 340 A1 offenbaren Materialien, die eine gute Performance im UL 94 Test (insbesondere im UL 94V Test) haben, aber gleichzeitig niedrige LOI Werte.

Beispielsweise Materialien, die als Flammschutzmittel Kombinationen von Melamincyanurat mit Phosphorsäureestern und Phosphonsäureestern enthalten, haben gute Ergebnisse in UL 94V Tests, aber sehr niedrige LOI Werte, beispielsweise < 25 %. Derartige Kombinationen von Melamincyanurat mit Phosphorsäureestern und Phosphonsäureestern sind vor allem bei Mänteln von dünnen Kabeln als Flammschutzmittel nicht ausreichend. Für verschiedene Flammschutzanwendungen ist normativ, z.B. in der DIN EN 45545, ein hoher LOI Wert gefordert.

Demgegenüber können mit Kombinationen von Melamincyanurat mit Phosphinaten sehr hohe LOI Werte (> 30 %) erreicht werden, aber keine guten Ergebnisse im UL 94V Test. Entsprechende Materialien offenbaren beispielsweise US 6,207,736 B1, US 6,255,371, US 6,365,071 B1, US 6,509,401 B1 und US 6,547,992 B1.

Viele der aus dem Stand der Technik bekannten Zusammensetzungen zeigen entweder keine ausreichenden mechanischen Eigenschaften oder weisen nur unzulängliche Flammeigenschaften, wie beispielsweise Flammwidrigkeit und Performance, im UL 94V Test auf.

In der PCT/EP2015/053192 werden Zusammensetzungen offenbart, die ein thermoplastisches Polyurethan, Melamincyanurat und eine Kombination phosphorhaltiger Flammschutzmittel enthalten. Diese Zusammensetzungen haben ausweislich der PCT/EP2015/053192 den Vorteil einer guten Flammwidrigkeit kombiniert mit guten mechanischen Eigenschaften sowie einer guten chemischen Beständigkeit.

Für viele Anwendungen wird darüber hinaus jedoch auch ein gutes Verhalten bezüglich der Verfärbung unter UV Einfluss gefordert. Dies ist beispielsweise relevant, wenn Materialien in sichtbaren Bereichen verbaut werden oder Kabel ummantelt werden, die der Sonneneinstrahlung ausgesetzt sind.

Ausgehend vom Stand der Technik lag der vorliegenden Erfindung demgemäß die Aufgabe zugrunde, flammgeschützte thermoplastische Polyurethane bereitzustellen, die gute mechanische Eigenschaften aufweisen, gute Flammschutzeigenschaften zeigen, gleichzeitig eine gute mechanische und chemische Beständigkeit aufweisen sowie sich zusätzlich bei UV Bestrahlung wenig oder nicht verfärben.

Erfindungsgemäß wird diese Aufgabe gelöst durch eine Zusammensetzung enthaltend mindestens die Komponenten (i) bis (v):
(i) ein thermoplastisches Polyurethan TPU-1, das auf einem aliphatischen Diisocyanat basiert,
(ii) ein thermoplastisches Polyurethan TPU-2, das auf einem aromatischen Diisocyanat basiert,
(iii) ein Melamincyanurat,
(iv) ein erstes phosphorhaltiges Flammschutzmittel (F1) ausgewählt aus der Gruppe bestehend aus Derivaten der Phosphorsäure und Derivaten der Phosphonsäure und
(v) ein weiteres phosphorhaltiges Flammschutzmittel (F2) ausgewählt aus der Gruppe bestehend aus Derivaten der Phosphinsäure.

Die erfindungsgemäßen Zusammensetzungen enthalten mindestens ein thermoplastisches Polyurethan TPU-1 und mindestens ein thermoplastisches Polyurethan TPU-2, sowie Melamincyanurat und eine Kombination aus zwei phosphorhaltigen Flammschutzmitteln (F1) und (F2).

Es wurde überraschend gefunden, dass die erfindungsgemäßen Zusammensetzungen gegenüber den aus dem Stand der Technik bekannten Zusammensetzungen verbesserte Eigenschaften aufweisen, und sich insbesondere nur geringfügig verfärben, wenn sie UV-Licht ausgesetzt sind.

Die erfindungsgemäßen Zusammensetzungen enthalten Melamincyanurat. Es hat sich überraschend gezeigt, dass die erfindungsgemäßen Zusammensetzungen durch die Kombination der erfindungsgemäßen Komponenten ein optimiertes Eigenschaftsprofil aufweisen, insbesondere für die Verwendung als Kabelummantelung.

Als Melamincyanurat im Rahmen dieser Anmeldung versteht man u. a. sämtliche handelsüblichen und kommerziell verfügbaren festen, bevorzugt partikelförmigen Produktqualitäten. Beispiele hierfür sind u. a. Melapur MC 25 (BASF SE) sowie Budit 315 (Budenheim).

Erfindungsgemäß wird Melamincyanurat vorzugsweise als ein 1 : 1 Salz aus Melamin und Cyanursäure eingesetzt. Dabei ist der Überschuss Melamin beispielsweise kleiner als 0,2 %, bevorzugt kleiner als 0,15 %, weiter bevorzugt kleiner als 0,1 %. Erfindungsgemäß ist der Überschuss Cyanursäure beispielsweise kleiner als 0,25 %, bevorzugt kleiner als 0,2 %, weiter bevorzugt kleiner als 0,15 %.

Im Rahmen der vorliegenden Erfindung ist es ebenfalls möglich, dass das eingesetzte Melamincyanurat behandelt ist, beispielsweise mit einer organischen Verbindung. Entsprechende Materialien sind grundsätzlich aus dem Stand der Technik bekannt.

Das erfindungsgemäß geeignete Melamincyanurat besteht bevorzugt aus Partikeln, die üblicherweise einen mittleren Teilchendurchmesser von 0,1 µm bis 100 µm aufweisen, vorzugsweise von 0,5 µm bis 60 µm, besonders bevorzugt 1 µm bis 10 µm. Dabei kann die Partikelgrößenverteilung im Rahmen der vorliegenden Erfindung monomodal oder auch multimodal, beispielsweise bimodal sein.

Gemäß einer weiteren Ausführungsform betrifft die vorliegende Erfindung daher eine Zusammensetzung wie zuvor beschrieben, wobei das Melamincyanurat eine Partikelgröße im Bereich von 0,1 bis 100 µm aufweist.

Melamincyanurat ist in der erfindungsgemäßen Zusammensetzung in geeigneten Mengen vorhanden. Beispielsweise ist der Anteil des Melamincyanurats in der Zusammensetzung im Bereich von 20 bis 40 Gew.-%, bezogen auf die gesamte Zusammensetzung, bevorzugt Zusammensetzung im Bereich von 25 bis 35 Gew.-%, bezogen auf die gesamte Zusammensetzung, insbesondere Zusammensetzung im Bereich von etwa 30 Gew.-%, bezogen auf die gesamte Zusammensetzung.

Gemäß einer weiteren Ausführungsform betrifft die vorliegende Erfindung daher eine Zusammensetzung wie zuvor beschrieben, wobei der Anteil des Melamincyanurats in der Zusammensetzung im Bereich von 20 bis 40 Gew.-%, bezogen auf die gesamte Zusammensetzung, liegt.

Die Summe der Komponenten der Zusammensetzung ergibt dabei jeweils 100 Gew.-%.

Erfindungsgemäß enthält die Zusammensetzung weiter ein thermoplastisches Polyurethan TPU-1, das einem aliphatischen Diisocyanat basiert, und ein weiteres TPU-2, wobei TPU-2 auf einem aromatischen Diisocyanat basiert.

Thermoplastische Polyurethane sind grundsätzlich bekannt. Die Herstellung erfolgt üblicher Weise durch Umsetzung der Komponenten (a) Isocyanaten und (b) gegenüber Isocyanaten reaktiven Verbindungen und gegebenenfalls (c) Kettenverlängerungsmittel gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Die erfindungsgemäßen Zusammensetzungen enthalten mindestens ein thermoplastisches Polyurethan TPU-1, das auf einem aliphatischen Diisocyanat basiert, und mindestens ein thermoplastisches Polyurethan TPU-2, das auf einem aromatischen Diisocyanat basiert. Demgemäß wird zur Herstellung des TPU-1 ein aliphatisches Isocyanat, zur Herstellung von TPU-2 ein aromatisches Isocyanat eingesetzt.

Es hat sich gezeigt, dass insbesondere durch den hohen Anteil von TPU-1 in den erfindungsgemäßen Zusammensetzungen geringe Rauchgasdichten erreicht werden können. Für die bevorzugten Zusammensetzungen, die neben dem TPU-1 noch das TPU-2 enthalten, sind neben den Rauchgasdichten und Flammeigenschaften auch die mechanischen Eigenschaften weiteroptimiert.

Als organische Isocyanate (a) für die Herstellung des TPU-1 werden bevorzugt aliphatische oder cycloaliphatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat.

Gemäß einer weiteren Ausführungsform betrifft die vorliegende Erfindung daher eine Zusammensetzung wie zuvor beschrieben, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.

Als organische Isocyanate (a) für die Herstellung des TPU-2 werden bevorzugt araliphatische und/oder aromatische Isocyanate eingesetzt, weiter bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat und/oder Phenylendiisocyanat. Besonders bevorzugt wird 4,4'-MDI eingesetzt.

Gemäß einer weiteren Ausführungsform betrifft die vorliegende Erfindung daher eine Zusammensetzung wie zuvor beschrieben, wobei das thermoplastische Polyurethan TPU-2 auf Diphenylmethandiisocyanat (MDI) basiert.

Erfindungsgemäß können als gegenüber Isocyanaten reaktive Verbindungen (b) grundsätzlich alle dem Fachmann bekannten geeigneten Verbindungen mit gegenüber Isocyanaten reaktiven funktionellen Gruppen eingesetzt werden. Als gegenüber Isocyanaten reaktive Verbindungen (b) wird bevorzugt für TPU-1 und TPU-2 ein Polycarbonatdiol oder ein Polytetrahydrofuranpolyol eingesetzt. Geeignete Polytetrahydrofuranpolyole weisen beispielsweise ein Molekulargewicht im Bereich von 500 bis 5000, bevorzugt 500 bis 2000, besonders bevorzugt 800 bis 1200 auf.

Erfindungsgemäß wird bevorzugt mindestens ein Polycarbonatdiol eingesetzt, bevorzugt ein aliphatisches Polycarbonatdiol. Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf Butandiol und Hexandiol, Polycarbonatdiole basierend auf Pentandiol und Hexandiol, Polycarbonatdiole basierend auf Hexandiol, und Mischungen aus zwei oder mehr dieser Polycarbonatdiole eingesetzt.

Vorzugsweise weisen die eingesetzten Polycarbonatdiole ein zahlenmittleres Molekulargewicht Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf.

Die vorliegende Erfindung betrifft gemäß einer weiteren bevorzugten Ausführungsform auch eine Zusammensetzung wie zuvor beschrieben, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole und wobei das Polycarbonatdiol ein zahlenmittleres Molekulargewicht Mn im Bereich von 500 bis 4000, bestimmt über GPC, aufweist.

Weiter bevorzugt sind Copolycarbonatdiole basierend auf den Diolen 1,5-Pentandiol und 1,6-Hexandiol, bevorzugt mit einem Molekulargewicht Mₙ von ca. 2000 g/mol.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglykol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen, ganz besonders bevorzugt ist 1,4-Butandiol.

Katalysatoren (d) welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismut-octanoat. Die Katalysatoren (d) werden bevorzugt in Mengen von 0,0001 bis 0,1 Gew.-Teilen pro 100 Gew.-Teile der mit Isocyanaten reaktiven Verbindung (b) eingesetzt. Bevorzugt werden zur Herstellung von thermoplastischen Polyurethanen, die auf einem aliphatischen Diisocyanat basieren, Bismuthkataylsatoren eingesetzt. Zur Herstellung von thermoplastischen Polyurethanen, die auf einem aromatischen Diisocyanat basieren, werden bevorzugt Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Herstellungsverfahren für thermoplastische Polyurethane werden beispielsweise offenbart in EP 0922552 A1, DE 10103424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder. Zur Einstellung von Härte von TPU-1 oder TPU-2 können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Härte Shore A von kleiner als 95, vorzugsweise von 95 bis 80 Shore A, besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Erfindungsgemäß weist das TPU-1 vorzugsweise eine Härte im Bereich von 85A bis 65D, bestimmt gemäß DIN ISO 7619-1 auf, weiter bevorzugt im Bereich von 55D bis 65D, bestimmt gemäß DIN ISO 7619-1.

Erfindungsgemäß weist das TPU-2 vorzugsweise eine Härte im Bereich von 70A bis 65D, bestimmt gemäß DIN ISO 7619-1 auf, weiter bevorzugt im Bereich von 80A bis 60D, bestimmt gemäß DIN ISO 7619-1, besonders bevorzugt im Bereich von 80A bis 90A, bestimmt gemäß DIN ISO 7619-1.

Gemäß einer weiteren Ausführungsform betrifft die vorliegende Erfindung daher eine Zusammensetzung wie zuvor beschrieben, wobei das thermoplastische Polyurethan TPU-1 eine Shore Härte im Bereich von 85A bis 65D, bestimmt gemäße DIN ISO 7619-1, aufweist. Gemäß einer weiteren Ausführungsform betrifft die vorliegende Erfindung daher eine Zusammensetzung wie zuvor beschrieben, wobei das thermoplastische Polyurethan TPU-2 eine Shore Härte im Bereich von 70A bis 65D, bestimmt gemäße DIN ISO 7619-1, aufweist.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 1,0 bis 1,04 : 1 beträgt.

Vorzugsweise weist das TPU-1 ein Molekulargewicht von größer als 100.000 Da auf, das TPU-2 vorzugsweise ein Molekulargewicht im Bereich von 50.000 bis 150.000 Da. Die Obergrenze für das zahlenmittlere Molekulargewicht der thermoplastischen Polyurethane wird in aller Regel durch die Verarbeitbarkeit wie auch das gewünschte Eigenschaftsspektrum bestimmt.

Gemäß einer weiteren Ausführungsform betrifft die vorliegende Erfindung daher eine Zusammensetzung wie zuvor beschrieben, wobei das thermoplastische Polyurethan TPU-1 ein Molekulargewicht im Bereich von 100.000 Da bis 400.000 Da aufweist. Gemäß einer weiteren Ausführungsform betrifft die vorliegende Erfindung daher eine Zusammensetzung wie zuvor beschrieben, wobei das thermoplastische Polyurethan TPU-2 ein Molekulargewicht im Bereich von 50.000 bis 150.000 Da aufweist.

Die erfindungsgemäße Zusammensetzung enthält das mindestens eine thermoplastische Polyurethan TPU-1 und das mindestens eine thermoplastische Polyurethan TPU-2 in Summe in einer Menge im Bereich von 30 Gew.-% bis 75 Gew.-%, bezogen auf die gesamte Zusammensetzung, insbesondere im Bereich von 35 Gew.-% bis 75 Gew.-%, bezogen auf die gesamte Zusammensetzung, bevorzugt im Bereich von 40 Gew.-% bis 70 Gew.-%, weiter bevorzugt im Bereich von 45 Gew.-% bis 65 Gew.-% und besonders bevorzugt im Bereich von 50 Gew.-% bis 60 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil der Summe der thermoplastischen Polyurethane in der Zusammensetzung im Bereich von 30 Gew.-% bis 75 Gew.-%, bezogen auf die gesamte Zusammensetzung, liegt.

Dabei ergibt die Summe aller Komponenten der Zusammensetzung jeweils 100 Gew.-%.

Im Rahmen der vorliegenden Erfindung kann das Verhältnis der eingesetzten thermoplastischen Polyurethane in weiten Bereichen variieren. Beispielsweise werden das thermoplastische Polyurethan TPU-1 und das thermoplastische Polyurethan TPU-2 in einem Verhältnis im Bereich von 2:1 bis 1:5 eingesetzt. Vorzugsweise werden das thermoplastische Polyurethan TPU-1 und das thermoplastische Polyurethan TPU-2 in einem Verhältnis im Bereich von 1:1 bis 1:5, weiter bevorzugt im Bereich von 1:2 bis 1:4, besonders bevorzugt im Bereich von 1:2,5 bis 1:3 eingesetzt.

In einer Ausführungsform werden zur Herstellung der erfindungsgemäßen Zusammensetzungen die thermoplastischen Polyurethane und Flammschutzmittel in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, ein weiteres TPU und ein weiteres Flammschutzmittel eingebracht wird.

Das Vermischen des thermoplastischen Polyurethans mit dem Polymer und dem Flammschutzmittel, erfolgt in einer Mischeinrichtung, die bevorzugt ein Innen-Kneter oder ein Extruder, bevorzugt ein Zweiwellenextruder, ist. In einer bevorzugten Ausführungsform ist zumindest ein in die Mischeinrichtung in dem mindestens einem weiteren Arbeitsschritt eingebrachte Flammschutzmittel flüssig, d.h. flüssig bei einer Temperatur von 21 °C. In einer anderen bevorzugten Ausführungsform der Verwendung eines Extruder ist das eingebrachte Flammschutzmittel bei einer Temperatur flüssig, die in Fließrichtung des Füllgutes in dem Extruders hinter dem Einfüllpunkt herrscht.

Die erfindungsgemäßen Zusammensetzungen enthalten neben den thermoplastischen Polyurethanen TPU-1 und TPU-2 sowie Melamincyanurat noch eine Kombination aus zwei phosphorhaltigen Flammschutzmitteln (F1) und (F2). Die erfindungsgemäßen Zusammensetzungen enthalten dabei mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure.

Gemäß einer weiteren bevorzugten Ausführungsform ist das phosphorhaltige Flammschutzmittel (F1) bei 21 °C flüssig.

Bevorzugt handelt es sich bei dem Flammschutzmittel (F1) ausgewählt aus der Gruppe bestehend aus Derivaten der Phosphorsäure und Derivaten der Phosphonsäure um Salze mit organischem oder anorganischem Kation oder um organische Ester. Organische Ester sind Derivate der phosphorhaltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden phosphorhaltigen Säure verestert.

Gemäß einer weiteren Ausführungsform betrifft die vorliegende Erfindung daher eine Zusammensetzung wie zuvor beschrieben, wobei das phosphorhaltige Flammschutzmittel (F1) ein Phosphorsäureester ist.

Organische Phosphatester sind bevorzugt, besonders die Triester, der Phosphorsäure, wie Trialkylphosphate und insbesondere Triarylphosphate, wie zum Beispiel Triphenylphosphat.

Bevorzugt werden erfindungsgemäß als Flammschutzmittel für die thermoplastischen Polyurethane Phosphorsäureester der allgemeinen Formel (I) 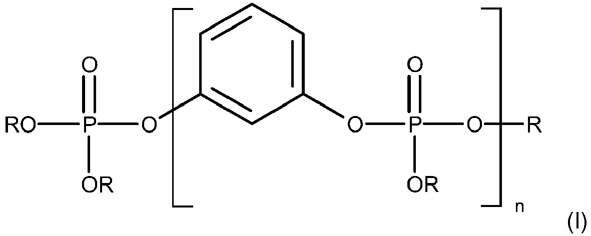 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugte phosphorhaltige Flammschutzmittel (F1) sind Bisphenol-A bis-(diphenylphosphat) (BDP), das üblicherweise als Oligomer vorliegt, und Diphenylkresylphosphat (DPK).

Demgemäß betrifft die vorliegende Erfindung gemäß einer weiteren Ausführungsform auch eine Zusammensetzung wie zuvor beschrieben, wobei das phosphorhaltige Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).

Gemäß einer weiteren Ausführungsform betrifft die vorliegende Erfindung auch eine Zusammensetzung wie zuvor beschrieben, wobei das phosphorhaltige Flammschutzmittel (F1) Resorcinol bis-diphenylphosphat (RDP) ist.

Bei den organischen Phosphonaten handelt es sich um Salze mit organischem oder anorganischem Kation oder um die Ester der Phosphonsäure. Bevorzugte Ester der Phosphonsäure sind die Diester von Alkyl- oder Phenylphosphonsäuren. Beispielhaft für die erfindungsgemäß als Flammschutzmittel einzusetzenden Phosphonsäureester seien die Phosphonate der allgemeinen Formel (II) 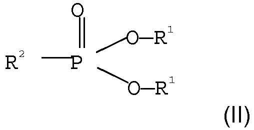 angeführt, wobei
- R¹: für gegebenenfalls substituierte, Alkyl-, Cycloalkyl- oder Phenylgruppen steht, wobei die beiden Reste R¹ auch cyclisch miteinander verknüpft sein können und
- R²:: für einen, gegebenenfalls substituierten, Alkyl-, Cycloalkyl- oder Phenylrest steht.

Besonders geeignet sind dabei cyclische Phosphonate wie z.B. 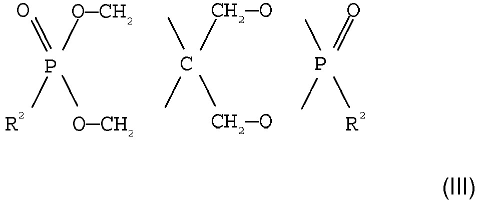 mit R² = CH₃ und C₆H₅, die sich vom Pentaerythrit ableiten, oder 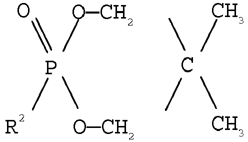 mit R² = CH₃ und C₆H₅, die sich vom Neopentylglykol ableiten, oder 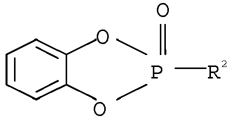 mit R² = CH₃ und C₆H₅, die sich vom Brenzkatechin ableiten, aber auch 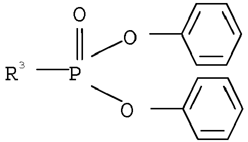 mit R² = einem unsubstituierten oder auch substituierten Phenylrest.

Gemäß einer weiteren Ausführungsform der vorliegenden Erfindung enthält die erfindungsgemäße Zusammensetzungen dabei mindestens ein erstes phosphorhaltiges Flammschutzmittel (F1) ausgewählt aus der Gruppe bestehend aus Alkylestern der Phosphorsäure und Alkylestern der Phosphonsäure, wobei die Alkylreste ausgewählt sind aus C1 bis C12-Alkylresten, und mindestens ein weiteres phosphorhaltiges Flammschutzmittel (F2) ausgewählt aus der Gruppe bestehend aus Derivaten der Phosphinsäure.

Erfindungsgemäß ist das phosphorhaltige Flammschutzmittel (F1) beispielsweise ausgewählt aus der Gruppe bestehend aus Alkylestern der Phosphorsäure und Alkylestern der Phosphonsäure, wobei die Alkylreste ausgewählt sind aus C1 bis C12-Alkylresten. Beispielsweise ist das phosphorhaltige Flammschutzmittel (F1) ausgewählt aus der Gruppe bestehend aus Alkylestern der Phosphorsäure, wobei die Alkylreste ausgewählt sind aus C1 bis C12-Alkylresten. Alternativ kann das phosphorhaltige Flammschutzmittel (F1) ausgewählt sein aus der Gruppe bestehend aus Alkylestern der Phosphonsäure, wobei die Alkylreste ausgewählt sind aus C1 bis C12-Alkylresten.

Sofern der Ester mehr als einen Alkylrest enthält, können die Alkylreste gleich oder unterschiedlich sein. Erfindungsgemäß können die Alkylreste substituiert oder unsubstituiert sein, beispielsweise halogeniert. Die Alkylreste können linear, verzweigt oder cyclisch sein. Gemäß einer bevorzugten Ausführungsform sind die Alkylreste ausgewählt aus C1 bis C8-Alkylresten, weiter bevorzugt ausgewählt aus C1 bis C6-Alkylresten.

Demgemäß ist das phosphorhaltige Flammschutzmittel (F1) gemäß einer weiteren Ausführungsform ausgewählt aus der Gruppe bestehend aus Alkylestern der Phosphorsäure und Alkylestern der Phosphonsäure, wobei die Alkylreste ausgewählt sind aus C1 bis C8-Alkylresten. Weiter bevorzugt ist das phosphorhaltige Flammschutzmittel (F1) vorzugsweise ausgewählt aus der Gruppe bestehend aus Alkylestern der Phosphorsäure und Alkylestern der Phosphonsäure, wobei die Alkylreste ausgewählt sind aus C1 bis C6-Alkylresten. Gemäß einer weiteren Ausführungsform ist das phosphorhaltige Flammschutzmittel (F1) ausgewählt aus der Gruppe bestehend aus Alkylestern der Phosphorsäure, wobei die Alkylreste ausgewählt sind aus C1 bis C8-Alkylresten, bevorzugt aus C1 bis C6-Alkylresten. Gemäß einer alternativen Ausführungsform ist das phosphorhaltige Flammschutzmittel (F1) ausgewählt aus der Gruppe bestehend aus Alkylestern der Phosphonsäure, wobei die Alkylreste ausgewählt sind aus C1 bis C8-Alkylresten, bevorzugt aus C1 bis C6-Alkylresten.

Beispielsweise handelt es sich bei dem Flammschutzmittel (F1) um organische Ester, insbesondere um einen Dialkylester, in einer anderen bevorzugten Ausführungsform um einen Trialkylester. Besonders bevorzugt sind alle Hydroxygruppen der entsprechenden phosphorhaltigen Säure verestert.

Gemäß einer weiteren Ausführungsform betrifft die vorliegende Erfindung daher eine Zusammensetzung wie zuvor beschrieben, wobei das phosphorhaltige Flammschutzmittel (F1) Trialkyl-Phosphorsäureester ist, wobei die Alkylreste ausgewählt sind aus C1 bis C12-Alkylresten.

Geeignete Alkylreste sind beispielsweise Methylgruppen, Ethylgruppen, Propylgruppen, Butylgruppen, Pentylgruppen, Hexylgruppen, Heptylgruppen oder Octylgruppen.

Organische Phosphatester sind bevorzugt die Triester der Phosphorsäure, wie Trialkylphosphate. Erfindungsgemäß geeignet ist beispielsweise Tris-(2-ethylhexyl)-phosphat.

Erfindungsgemäß geeignete Ester der Phosphonsäure sind die Diester von Alkylphosphonsäuren. Geeignete Alkylreste sind die oben genannten.

Erfindungsgemäß geeignete Phosphonate sind beispielsweise Methanphosphonaten oder Spirophosphonate wie Phosphonaten der allgemeinen Formel (IIIa): 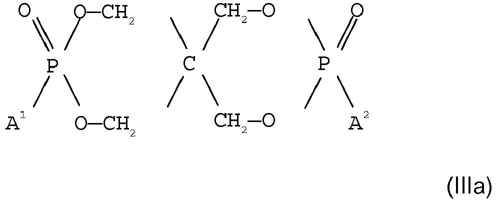 wobei A¹ und A² unabhängig voneinander für einen linearen oder verzweigten Alkylrest mit 1 bis 4 C Atomen stehen, bevorzugt für eine Methylgruppe.

Demgemäß betrifft die vorliegende Erfindung gemäß einer weiteren Ausführungsform auch eine Zusammensetzung wie zuvor beschrieben, wobei das phosphorhaltige Flammschutzmittel (F1) ausgewählt ist aus der Gruppe bestehend aus Trialkylphosphaten, Methanphosphonaten und Phophonaten der allgemeinen Formel (IIIa): 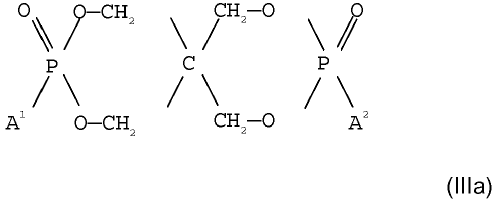 wobei A¹ und A² unabhängig voneinander für einen linearen oder verzweigten Alkylrest mit 1 bis 4 C Atomen stehen, bevorzugt für eine Methylgruppe.

Gemäß einer weiteren Ausführungsform betrifft die vorliegende Erfindung auch eine Zusammensetzung wie zuvor beschrieben, wobei das phosphorhaltige Flammschutzmittel (F1) Tris-(2-ethylhexyl)-phosphat ist.

Gemäß einer weiteren Ausführungsform betrifft die vorliegende Erfindung auch eine Zusammensetzung wie zuvor beschrieben, wobei das phosphorhaltige Flammschutzmittel (F1) Dimethylspirophosphonat ist.

Der Anteil des Flammschutzmittels (F1) in der erfindungsgemäßen Zusammensetzung liegt beispielsweise im Bereich von 2 bis 15 Gew.-%, bezogen auf die gesamte Zusammensetzung, bevorzugt im Bereich von 3 bis 10 Gew.-%, bezogen auf die gesamte Zusammensetzung, insbesondere im Bereich von 5 bis 8 Gew.-%, bezogen auf die gesamte Zusammensetzung.

Gemäß einer weiteren Ausführungsform betrifft die vorliegende Erfindung daher eine Zusammensetzung wie zuvor beschrieben, wobei der Anteil des Flammschutzmittels (F1) im Bereich von 2 bis 15 Gew.-%, bezogen auf die gesamte Zusammensetzung, liegt.

Bevorzugt handelt es sich bei dem Flammschutzmittel (F2) ausgewählt aus Derivaten der Phosphinsäure, um Salze mit organischem oder anorganischem Kation oder um organische Ester. Organische Ester sind Derivate Phosphinsäure, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der Phosphinsäure verestert.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Weiter bevorzugt ist auch R³ ein Ethylrest oder ein Methylrest. In einer bevorzugten Ausführungsform sind R¹, R² und R³ gleichzeitig Ethylrest oder Methylreste.

Bevorzugt sind auch Phosphinate, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Aluminium-, Calcium- oder Zinksalze, weiter bevorzugt Aluminium- oder Zinksalze. Eine bevorzugte Ausführungsform ist Diethylaluminiumphosphinat.

Gemäß einer weiteren Ausführungsform betrifft die vorliegende Erfindung daher eine Zusammensetzung wie zuvor beschrieben, wobei das phosphorhaltige Flammschutzmittel (F2) ein Phosphinat ist.

Gemäß einer weiteren Ausführungsform betrifft die vorliegende Erfindung daher eine Zusammensetzung wie zuvor beschrieben, wobei das Phosphinat ausgewählt ist aus der Gruppe bestehend aus Aluminiumphosphinaten oder Zinkphosphinaten.

Der Anteil des Flammschutzmittels (F2) in der erfindungsgemäßen Zusammensetzung liegt beispielsweise im Bereich von 3 bis 15 Gew.-%, bezogen auf die gesamte Zusammensetzung, insbesondere 5 bis 15 Gew.-%, bezogen auf die gesamte Zusammensetzung, bevorzugt im Bereich von 7 bis 13 Gew.-%, bezogen auf die gesamte Zusammensetzung, insbesondere im Bereich von 9 bis 11 Gew.-%, bezogen auf die gesamte Zusammensetzung.

Gemäß einer weiteren Ausführungsform betrifft die vorliegende Erfindung daher eine Zusammensetzung wie zuvor beschrieben, wobei der Anteil des Flammschutzmittels (F2) in der Zusammensetzung im Bereich von 3 bis 15 Gew.-%, bezogen auf die gesamte Zusammensetzung, liegt.

In einer Ausführungsform werden zur Herstellung der erfindungsgemäßen Zusammensetzungen thermoplastisches Polyurethan, Melamincyanurat und Flammschutzmittel (F1) und (F2) in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, Melamincyanurat und die Flammschutzmittel (F1) und (F2) eingebracht werden.

Das Vermischen des thermoplastischen Polyurethans mit den übrigen Komponenten erfolgt in einer Mischeinrichtung, die bevorzugt ein Innen-Kneter oder ein Extruder, bevorzugt ein Zweiwellenextruder, ist. In einer bevorzugten Ausführungsform ist zumindest ein in die Mischeinrichtung in dem mindestens einen weiteren Arbeitsschritt eingebrachtes Flammschutzmittel flüssig, d.h. flüssig bei einer Temperatur von 21 °C. In einer anderen bevorzugten Ausführungsform der Verwendung eines Extruders ist das eingebrachte Flammschutzmittel zumindest teilweise bei einer Temperatur flüssig, die in Fließrichtung des Füllgutes in dem Extruder hinter dem Einfüllpunkt herrscht.

Erfindungsgemäß kann die Zusammensetzung weitere Flammschutzmittel, beispielsweise auch phosphorhaltige Flammschutzmittel enthalten. Bevorzugt enthält die erfindungsgemäße Zusammensetzung jedoch neben dem Melamincyanurat und den phosphorhaltigen Flammschutzmitteln (F1) und (F2) keine weiteren Flammschutzmittel.

Durch die Kombination der verschiedenen Flammschutzmittel werden mechanische Eigenschaften und Flammschutzeigenschaften erfindungsgemäß optimiert.

Dabei liegt das Massen-Verhältnis der Summe der in der Zusammensetzung enthaltenen phosphorhaltigen Flammschutzmittel (F1) und (F2) zu dem in der Zusammensetzung enthaltenen Melamincyanurat erfindungsgemäß im Bereich von 1 : 3 bis 1 : 1, beispielsweise in einem Bereich von 1 : 2.

Demgemäß betrifft die vorliegende Erfindung gemäß einer weiteren Ausführungsform auch eine Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure, wobei
- der Anteil des thermoplastischen Polyurethans in der Zusammensetzung im Bereich von 30 bis 75 Gew.-% liegt.
- der Anteil des Melamincyanurats in der Zusammensetzung im Bereich von 20 bis 40 Gew.-% liegt,
- der Anteil des Flammschutzmittels (F2) in der Zusammensetzung im Bereich von 3 bis 15 Gew.-% liegt, und
- der Anteil des Flammschutzmittels (F1) im Bereich von 2 bis 15 Gew.-% liegt,
jeweils bezogen auf die gesamte Zusammensetzung, wobei die Summe der Komponenten der Zusammensetzung 100 Gew.-% ergibt.

Erfindungsgemäß kann die Zusammensetzung weitere Bestandteile enthalten, beispielsweise übliche Hilfs- und Zusatzstoffe für thermoplastische Polyurethane. Bevorzugt enthält die Zusammensetzung neben dem Melamincyanurat, dem mindestens einen phosphorhaltigen Flammschutzmittel (F1) und dem mindestens einen phosphorhaltigen Flammschutzmittel (F2) keine weiteren Flammschutzmittel. Weiter bevorzugt enthält die erfindungsgemäße Zusammensetzung Melamincyanurat genau ein phosphorhaltiges Flammschutzmittel (F1) ausgewählt aus der Gruppe bestehend aus Derivaten der Phosphorsäure und Derivaten der Phosphonsäure und genau ein phosphorhaltiges Flammschutzmittel (F2) ausgewählt aus der Gruppe bestehend aus Derivaten der Phosphinsäure.

Die vorliegende Erfindung betrifft auch die Verwendung der erfindungsgemäßen Zusammensetzung enthaltend mindestens ein flammgeschütztes thermoplastisches Polyurethan wie zuvor beschrieben zur Herstellung von Beschichtungen, Dämpfungselementen, Faltenbälgen, Folien oder Fasern, Formkörpern, Fußböden für Gebäude und Transport, "non woven" Gewebe, bevorzugt Dichtungen, Rollen, Schuhsohlen, Schläuchen, Kabel, Kabelstecker, Kabelummantelungen, Kissen, Laminaten, Profilen, Riemen, Sätteln, Schäumen, Steckverbindungen, Schleppkabel, Solarmodulen, Verkleidungen in Automobilen. Bevorzugt ist die Verwendung zur Herstellung von Kabelummantelungen. Die Herstellung erfolgt bevorzugt aus Granulaten, durch Spritzguss, Kalandrieren, Pulversintern, oder Extrusion und/oder durch zusätzliches Schäumen der erfindungsgemäßen Zusammensetzung.

Demgemäß betrifft die vorliegende Erfindung auch die Verwendung einer Zusammensetzung enthaltend mindestens ein thermoplastisches Polyurethan, mindestens Melamincyanurat, mindestens ein erstes phosphorhaltiges Flammschutzmittel (F1) ausgewählt aus der Gruppe bestehend aus Derivaten der Phosphorsäure und Derivaten der Phosphonsäure und mindestens ein weiteres phosphorhaltiges Flammschutzmittel (F2) ausgewählt aus der Gruppe bestehend aus Derivaten der Phosphinsäure wie zuvor beschrieben zur Herstellung von Kabelummantelungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Zusammensetzung enthaltend mindestens die Komponenten (i) bis (v):
   (i) ein thermoplastisches Polyurethan TPU-1, das auf einem aliphatischen Diisocyanat basiert,
   (ii) ein thermoplastisches Polyurethan TPU-2, das auf einem aromatischen Diisocyanat basiert,
   (iii) ein Melamincyanurat,
   (iv) ein erstes phosphorhaltiges Flammschutzmittel (F1) ausgewählt aus der Gruppe bestehend aus Derivaten der Phosphorsäure und Derivaten der Phosphonsäure und
   (v) ein weiteres phosphorhaltiges Flammschutzmittel (F2) ausgewählt aus der Gruppe bestehend aus Derivaten der Phosphinsäure.
2. Zusammensetzung gemäß Ausführungsform 1, wobei das phosphorhaltige Flammschutzmittel (F2) ein Phosphinat ist.
3. Zusammensetzung gemäß Ausführungsform 2, wobei das Phosphinat ausgewählt ist aus der Gruppe bestehend aus Aluminiumphosphinaten oder Zinkphosphinaten.
4. Zusammensetzung gemäß einem der Ausführungsformen 1 bis 3, wobei das phosphorhaltige Flammschutzmittel (F1) ein Phosphorsäureester ist.
5. Zusammensetzung gemäß einem der Ausführungsformen 1 bis 4, wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).
6. Zusammensetzung gemäß einem der Ansprüche 1 bis 4, wobei das phosphorhaltige Flammschutzmittel (F1) ein Trialkyl-Phosphorsäureester ist, wobei die Alkylreste ausgewählt sind aus C1 bis C12-Alkylresten.
7. Zusammensetzung gemäß einem der Ansprüche 1 bis 3, wobei das Flammschutzmittel (F1) ausgewählt ist aus der Gruppe bestehend aus Trialkylphosphaten, Methanphosphonaten und Phophonaten der allgemeinen Formel (IIIa): 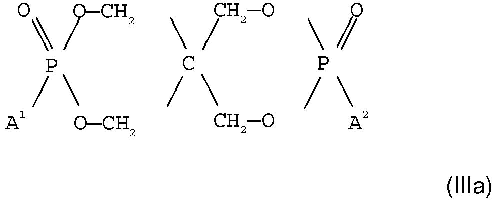 wobei A¹ und A² unabhängig voneinander für einen linearen oder verzweigten Alkylrest mit 1 bis 4 C Atomen stehen.
8. Zusammensetzung gemäß einem der Ausführungsformen 1 bis 7, wobei das Melamincyanurat eine Partikelgröße im Bereich von 0,1 bis 100 µm aufweist.
9. Zusammensetzung gemäß einem der Ausführungsformen 1 bis 8, wobei das thermoplastische Polyurethan TPU-1 eine Shore Härte im Bereich von 85A bis 65D, bestimmt gemäße DIN ISO 7619-1, aufweist.
10. Zusammensetzung gemäß einem der Ausführungsformen 1 bis 9, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.
11. Zusammensetzung gemäß einem der Ausführungsformen 1 bis 10, wobei das thermoplastische Polyurethan TPU-2 eine Shore Härte im Bereich von 70A bis 65D, bestimmt gemäße DIN ISO 7619-1, aufweist.
12. Zusammensetzung gemäß einem der Ausführungsformen 1 bis 11, wobei das thermoplastische Polyurethan TPU-2 auf Diphenylmethandiisocyanat (MDI) basiert.
13. Zusammensetzung gemäß einem der Ausführungsformen 1 bis 12, wobei der Anteil der Summe der thermoplastischen Polyurethane in der Zusammensetzung im Bereich von 30 bis 75 Gew.-%, bezogen auf die gesamte Zusammensetzung, liegt.
14. Zusammensetzung gemäß einem der Ausführungsformen 1 bis 13, wobei der Anteil des Melamincyanurats in der Zusammensetzung im Bereich von 20 bis 40 Gew.-%, bezogen auf die gesamte Zusammensetzung, liegt.
15. Zusammensetzung gemäß einem der Ausführungsformen 1 bis 14, wobei der Anteil des Flammschutzmittels (F2) in der Zusammensetzung im Bereich von 3 bis 15 Gew.-%, bezogen auf die gesamte Zusammensetzung, liegt.
16. Zusammensetzung gemäß einem der Ausführungsformen 1 bis 15, wobei der Anteil des Flammschutzmittels (F1) im Bereich von 2 bis 15 Gew.-%, bezogen auf die gesamte Zusammensetzung, liegt.
17. Verwendung einer Zusammensetzung gemäß einem der Ausführungsformen 1 bis 16 zur Herstellung von Kabelummantelungen.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe

Elastollan 1185A10: TPU der Shore Härte 85A der BASF Polyurethanes GmbH, Elastogranstrasse 60, 49448 Lemförde, basiert auf Polytetrahydrofuranpolyol (PTHF) mit einem Molekulargewicht von 1000 g/mol, 1,4-Butandiol, Diphenylmethan-4,4'-diisocyanat.

Elastollan 3090A10: TPU der Shore Härte 90A der BASF Polyurethanes GmbH, Elastogranstrasse 60, 49448 Lemförde, basiert auf Polycarbonatpolyol der Fi. Ube (Eternacoll PH-200D, basiert auf 1,5-Pentandiol und 1,6-Hexandiol) mit einem Molekulargewicht von 2000 g/mol, 1,4-Butandiol, Diphenylmethan-4,4'-diisocyanat.

Elastollan L 1160D10N: TPU der Shore Härte 60D der BASF Polyurethanes GmbH, Elastogranstrasse 60, 49448 Lemförde, basiert auf Polytetrahydrofuranpolyol (PTHF) mit einem Molekulargewicht von 1000 g/mol, 1,4-Butandiol, 4,4'-Diisocyanatodicyclohexylmethan.

Melapur MC 15 ED: Melamincyanurat (1,3,5-Triazin-2,4,6(1H,3H,5H)-trion, Verbindung mit 1,3,5-Triazin-2,4,6-triamin (1 : 1)), CAS #: 37640-57-6, BASF SE, 67056 Ludwigshafen, GERMANY, Partikelgröße D99% </= 50 µm, D50%<= 4,5 µm, Wassergehalt % (w/w) < 0,2.

Fyrolflex RDP: Resorcinol bis (diphenyl phosphat), CAS #: 125997-21-9, Supresta Netherlands B.V., Office Park De Hoef, Hoefseweg 1, 3821 AE Amersfoort, The Netherlands, Viskosität bei 25 °C = 700 mPas, Säurezahl < 0,1 mg KOH/g, Wassergehalt % (w/w) < 0,1.

Exolit OP 1230: Aluminiumdiethylphosphinat, CAS#: 225789-38-8, Clariant Produkte (Deutschland) GmbH, Chemiepark Knapsack, 50351 Hürth, Wassergehalt % (w/w) < 0,2, Durchschnittliche Partikelgröße (D50) 20-40 µm.

Chisorb 622 LT: Butandisäuredimethylester, Polymer mit 4-Hydroxy-2,2,6,6-tetramethyl-1-piperidinethanol, CAS #: 65447-77-0, BASF Polyurethanes GmbH, Postfach 1140, 49440 Lemfoerde, GERMANY.

Tinuvin 234: 2-(2H-benzzotriazol-2-yl)4,6-bis(1-ethyl-1-phenylethylphenol CAS #: 70321-86-17, BASF SE, 67056 Ludwigshafen, GERMANY.

### 2. Herstellung der Mischungen

In der nachfolgenden Tabelle 1 werden Zusammensetzungen aufgeführt, in denen die einzelnen Einsatzstoffe in Gewichtsanteilen (GT) angegeben sind. Die Mischungen wurden jeweils mit einem Doppelwellenextruder Typ ZE 40 A der Fa. Berstorff mit einer Verfahrensteillänge von 35 D unterteilt in 10 Gehäuse hergestellt. Die Zusammensetzungen sind in Tabelle 1 zusammengefasst (Angaben in Gew.-%).

**Tabelle 1**

| Zusammensetzung | 1 (VB) | 2 (VB) | 3 | 4 |
|---|---|---|---|---|
| 1185A10 | 56,2 | 55 | 40 | |
| 3090A10 | | | | 40 |
| L1160D10 | | | 15 | 15 |
| Disflamoll TOF | | | | |
| Fyroflex RDP | 5 | 5 | 5 | 5 |
| Melapur 15 ED | 29,8 | 29,8 | 29,8 | 29,8 |
| Exolit OP 1230 | 9 | 9 | 9 | 9 |
| Tinuvin 234 | | 0,6 | 0,6 | 0,6 |
| Chisorb 622 | | 0,6 | 0,6 | 0,6 |

| | | | | |
|---|---|---|---|---|
| (VB): Vergleichsbeispiel | | | | |

### 3. Mechanische Eigenschaften

Die Mischungen wurden mit einem Einwellenextruder Typ Arenz mit einer Dreizonenschnecke mit Mischteil (Schneckenverhältnis 1 : 3) zu Folien mit einer Dicke von 1,6 mm extrudiert. Gemessen wurden die Dichte, Shore Härte, Zugfestigkeit, Weiterreißfestigkeit, Abrieb und Reißdehnung der entsprechenden Probenkörper. Alle Zusammensetzungen weisen gute mechanische Eigenschaften auf. Die Ergebnisse sind in Tabelle 2 zusammengefasst.

**Tabelle 2**

| Standardmechanik | 1 (VB) | 2 (VB) | 3 | 4 |
|---|---|---|---|---|
| Dichte [g/cm3] | 1,287 | 1,347 | 1,29 | 1,323 |
| Shore Härte A | 92 | 89 | 90 | 92 |
| Zugfestigkeit [MPa] | 15 | 14 | 14 | 14 |
| Reißdehnung [%] | 580 | 520 | 520 | 470 |
| Weiterreißfestigkeit [kN/m] | 57 | 55 | 57 | 57 |
| Abrieb [mm³] | 90 | 131 | 107 | 134 |

| | | | | |
|---|---|---|---|---|
| (VB): Vergleichsbeispiel | | | | |

### Messmethoden:

| | |
|---|---|
| Dichte: | DIN EN ISO 1183-1, A |
| Shore Härte A: | DIN 53505 |
| Zugfestigkeit: | DIN EN ISO 527 |
| Reißdehnung: | DIN EN ISO 527 |
| Weiterreißfestigkeit: | DIN ISO 34-1, B (b |
| Abrieb: | DIN 53516 |

### 4. Verfärbung bei UV Belichtung

Die Mischungen wurden mit einem Einwellenextruder Typ Arenz mit einer Dreizonenschnecke mit Mischteil (Schneckenverhältnis1 : 3) zu Folien mit einer Dicke von 1,6 mm extrudiert. Gemessen wurden die delta E Werte (ASTM E313) der entsprechenden Probenkörper nach verschiedenen Belichtungszeiten gemäß der Methode ASTM G155 Cy4. Für die erfindungsgemäßen TPU Mischungen werden geringere delta E Werte gefunden. Die Ergebnisse sind in Tabelle 3 zusammengefasst.

**Tabelle 3**

| Belichtung ASTM G155 Cy 4 | Zeit | 1 (VB) | 2 (VB) | 3 | 4 |
|---|---|---|---|---|---|
| Farbmessung in Reflexion (ohne Glanz) | 0h | | | | |
| Farbabstand delta E | | 0 | 0 | 0 | 0 |
| Farbmessung in Reflexion (mit Glanz) | 0h | | | | |
| Farbabstand delta E | | 0 | 0 | 0 | 0 |
| Farbmessung in Reflexion (ohne Glanz) | 100h | | | | |
| Farbabstand delta E | | 4,8 | 1,9 | 1 | 0,5 |
| Farbmessung in Reflexion (mit Glanz) | 100h | | | | |
| Farbabstand delta E | | 4,8 | 1,4 | 0,6 | 0,5 |
| Farbmessung in Reflexion (ohne Glanz) | 200h | | | | |
| Farbabstand delta E | | 9,3 | 4,5 | 1,5 | 1,4 |
| Farbmessung in Reflexion (mit Glanz) | 200h | | | | |
| Farbabstand delta E | | 9,3 | 4,4 | 1,5 | 1,4 |
| Farbmessung in Reflexion (ohne Glanz) | 300h | | | | |
| Farbabstand delta E | | 14,9 | 8 | 2,4 | 2,7 |
| Farbmessung in Reflexion (mit Glanz) | 300h | | | | |
| Farbabstand delta E | | 15 | 7,5 | 2,4 | 2,7 |

| | | | | | |
|---|---|---|---|---|---|
| (VB): Vergleichsbeispiel | | | | | |

Ein kleiner Wert für delta E steht für eine geringere durch den Test verursachte Verfärbung. Je geringer die Verfärbung im Test ist, desto geringer die zu erwartende Verfärbung beim praktischen Gebrauch, beispielsweise unter Einwirkung von Sonnenlicht.

Die Ergebnisse zweigen, dass die erfindungsgemäßen Materialien verbesserte Eigenschaften aufweisen, insbesondere eine gute Langzeitstabilität.

## Patentansprüche

1. Zusammensetzung enthaltend mindestens die Komponenten (i) bis (v):
(i) ein thermoplastisches Polyurethan TPU-1, das auf einem aliphatischen Diisocyanat basiert,
(ii) ein thermoplastisches Polyurethan TPU-2, das auf einem aromatischen Diisocyanat basiert,
(iii) ein Melamincyanurat,
(iv) ein erstes phosphorhaltiges Flammschutzmittel (F1) ausgewählt aus der Gruppe bestehend aus Derivaten der Phosphorsäure und Derivaten der Phosphonsäure und
(v) ein weiteres phosphorhaltiges Flammschutzmittel (F2) ausgewählt aus der Gruppe bestehend aus Derivaten der Phosphinsäure.

2. Zusammensetzung gemäß Anspruch1, wobei das phosphorhaltige Flammschutzmittel (F2) ein Phosphinat ist.

3. Zusammensetzung gemäß Anspruch 2, wobei das Phosphinat ausgewählt ist aus der Gruppe bestehend aus Aluminiumphosphinaten oder Zinkphosphinaten.

4. Zusammensetzung gemäß einem der Ansprüche 1 bis 3, wobei das phosphorhaltige Flammschutzmittel (F1) ein Phosphorsäureester ist.

5. Zusammensetzung gemäß einem der Ansprüche 1 bis 4, wobei das Flammschutzmittel (F1) ausgewählt ist aus der Gruppe bestehend aus Resorcinol bis-diphenylphosphat (RDP), Bisphenol-A bis-(diphenylphosphat) (BDP), und Diphenylkresylphosphat (DPK).

6. Zusammensetzung gemäß einem der Ansprüche 1 bis 5, wobei das Melamincyanurat eine Partikelgröße im Bereich von 0,1 bis 100 µm aufweist.

7. Zusammensetzung gemäß einem der Ansprüche 1 bis 6, wobei das thermoplastische Polyurethan TPU-1 eine Shore Härte im Bereich von 85A bis 65D, bestimmt gemäße DIN ISO 7619-1, aufweist.

8. Zusammensetzung gemäß einem der Ansprüche 1 bis 7, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.

9. Zusammensetzung gemäß einem der Ansprüche 1 bis 8, wobei das thermoplastische Polyurethan TPU-2 eine Shore Härte im Bereich von 70A bis 65D, bestimmt gemäße DIN ISO 7619-1, aufweist.

10. Zusammensetzung gemäß einem der Ansprüche 1 bis 9, wobei das thermoplastische Polyurethan TPU-2 auf Diphenylmethandiisocyanat (MDI) basiert.

11. Zusammensetzung gemäß einem der Ansprüche 1 bis 10, wobei der Anteil der Summe der thermoplastischen Polyurethane in der Zusammensetzung im Bereich von 30 bis 75 Gew.-%, bezogen auf die gesamte Zusammensetzung, liegt.

12. Zusammensetzung gemäß einem der Ansprüche 1 bis 11, wobei der Anteil des Melamincyanurats in der Zusammensetzung im Bereich von 20 bis 40 Gew.-%, bezogen auf die gesamte Zusammensetzung, liegt.

13. Zusammensetzung gemäß einem der Ansprüche 1 bis 12, wobei der Anteil des Flammschutzmittels (F2) in der Zusammensetzung im Bereich von 3 bis 15 Gew.-%, bezogen auf die gesamte Zusammensetzung, liegt.

14. Zusammensetzung gemäß einem der Ansprüche 1 bis 13, wobei der Anteil des Flammschutzmittels (F1) im Bereich von 2 bis 15 Gew.-%, bezogen auf die gesamte Zusammensetzung, liegt.

15. Verwendung einer Zusammensetzung gemäß einem der Ansprüche 1 bis 14 zur Herstellung von Kabelummantelungen.

## Claims

1. A composition comprising at least components (i) to (v):
(i) a thermoplastic polyurethane TPU-1, based on an aliphatic diisocyanate,
(ii) a thermoplastic polyurethane TPU-2, based on an aromatic diisocyanate,
(iii) melamine cyanurate,
(iv) a first phosphorus-containing flame retardant (F1) selected from the group consisting of derivatives of phosphoric acid and derivatives of phosphonic acid and
(v) a further phosphorus-containing flame retardant (F2) selected from the group consisting of derivatives of phosphinic acid.

2. The composition according to claim 1, wherein the phosphorus-containing flame retardant (F2) is a phosphinate.

3. The composition according to claim 2, wherein the phosphinate is selected from the group consisting of aluminum phosphinates and zinc phosphinates.

4. The composition according to any of claims 1 to 3, wherein the phosphorus-containing flame retardant is a phosphoric ester.

5. The composition according to any of claims 1 to 4, wherein the flame retardant is selected from the group consisting of resorcinol bis(diphenyl phosphate) (RDP), bisphenol A bis(diphenyl phosphate) (BDP) and diphenyl cresyl phosphate (DPK).

6. The composition according to any of claims 1 to 5, wherein the melamine cyanurate has a particle size in the range from 0.1 to 100 µm.

7. The composition according to any of claims 1 to 6, wherein the thermoplastic polyurethane TPU-1 has a shore hardness in the range from 85A to 65D, determined in accordance with DIN ISO 7619-1.

8. The composition according to any of claims 1 to 7, wherein the thermoplastic polyurethane TPU-1 is based on at least one aliphatic diisocyanate selected from the group consisting of hexamethylene diisocyanate and di(isocyanatocyclohexyl)methane.

9. The composition according to any of claims 1 to 8, wherein the thermoplastic polyurethane TPU-2 has a Shore hardness in the range from 70A to 65D, determined in accordance with DIN ISO 7619-1.

10. The composition according to any of claims 1 to 9, wherein the thermoplastic polyurethane TPU-2 is based on diphenylmethane diisocyanate (MDI).

11. The composition according to any of claims 1 to 10, wherein the proportion of the sum of the thermoplastic polyurethanes in the composition is in the range from 30% to 75% by weight based on the overall composition.

12. The composition according to any of claims 1 to 11, wherein the proportion of the melamine cyanurate in the composition is in the range from 20% to 40% by weight based on the overall composition.

13. The composition according to any of claims 1 to 12, wherein the proportion of the flame retardant (F2) in the composition is in the range from 3% to 15% by weight based on the overall composition.

14. The composition according to any of claims 1 to 13, wherein the proportion of the flame retardant is in the range from 2% to 15% by weight based on the overall composition.

15. The use of a composition according to any of claims 1 to 14 for production of cable sheaths.

## Revendications

1. Composition contenant au moins les composants (i) jusqu'à (v) :
(i) un polyuréthane thermoplastique TPU-1, qui est à base d'un diisocyanate aliphatique,
(ii) un polyuréthane thermoplastique TPU-2, qui est à base d'un diisocyanate aromatique,
(iii) un cyanurate de mélamine,
(iv) un premier agent ignifugeant contenant du phosphore (F1) choisi dans le groupe constitué par les dérivés de l'acide phosphorique et les dérivés de l'acide phosphonique et
(v) un autre agent ignifugeant contenant du phosphore (F2) choisi dans le groupe constitué par les dérivés de l'acide phosphinique.

2. Composition selon la revendication 1, l'agent ignifugeant contenant du phosphore (F2) étant un phosphinate.

3. Composition selon la revendication 2, le phosphinate étant choisi dans le groupe constitué par les phosphinates d'aluminium ou les phosphinates de zinc.

4. Composition selon l'une quelconque des revendications 1 à 3, l'agent ignifugeant contenant du phosphore (F1) étant un ester de l'acide phosphorique.

5. Composition selon l'une quelconque des revendications 1 à 4, l'agent ignifugeant contenant du phosphore (F1) étant choisi dans le groupe constitué par le bis-diphénylphosphate de résorcinol (RDP), le bis-diphénylphosphate de bisphénol-A (BDP) et le phosphate de diphénylcrésyle (DPK).

6. Composition selon l'une quelconque des revendications 1 à 5, le cyanurate de mélamine présentant une grosseur de particule dans la plage de 0,1 jusqu'à 100 µm.

7. Composition selon l'une quelconque des revendications 1 à 6, le polyuréthane thermoplastique TPU-1 présentant une dureté Shore dans la plage de 85A jusqu'à 65D, déterminée selon la norme DIN ISO 7619-1.

8. Composition selon l'une quelconque revendications 1 à 7, le polyuréthane thermoplastique TPU-1 étant à base d'au moins un diisocyanate aliphatique choisi dans le groupe constitué par le diisocyanate d'hexaméthylène et le di(isocyanatocyclohexyl)méthane.

9. Composition selon l'une quelconque des revendications 1 à 8, le polyuréthane thermoplastique TPU-2 présentant une dureté Shore dans la plage de 70A jusqu'à 65D, déterminé selon la norme DIN ISO 7619-1.

10. Composition selon l'une quelconque des revendications 1 à 9, le polyuréthane thermoplastique TPU-2 étant à base de diisocyanate de diphénylméthane (MDI).

11. Composition selon l'une quelconque des revendications 1 à 10, la part de la somme des polyuréthanes thermoplastiques dans la composition se situant dans la plage de 30 jusqu'à 75% en poids, par rapport à la composition totale.

12. Composition selon l'une quelconque des revendications 1 à 11, la part du cyanurate de mélamine dans la composition se situant dans la plage de 20 jusqu'à 40% en poids, par rapport à la composition totale.

13. Composition selon l'une quelconque des revendications 1 à 12, la part de l'agent ignifugeant (F2) dans la composition se situant dans la plage de 3 jusqu'à 15% en poids, par rapport à la composition totale.

14. Composition selon l'une quelconque des revendications 1 à 13, la part de l'agent ignifugeant (F1) se situant dans la plage de 2 jusqu'à 15% en poids, par rapport à la composition totale.

15. Utilisation d'une composition selon l'une quelconque des revendications 1 à 14 pour la production de gaines de câbles.
